# EUROPEAN PATENT APPLICATION

(11) **EP 4 383 693 A1**
(43) Date of publication of application: **12.06.2024**
(21) Application number: 22852560.6
(22) Date of filing: 11.03.2022
(51) Int. Cl.: H04M 11/00, H04W 4/38, G06N 20/00

(54) **INFORMATION PROCESSING SYSTEM, AND INFORMATION PROCESSING PROGRAM**

(30) Priority: 04.08.2021 JP 2021127978
(71) Applicant: KONICA MINOLTA, INC., Tokyo 100-7015 (JP)
(72) Inventor: YAMAGUCHI, Takehisa, Tokyo 100-7015 (JP); OKAMOTO, Yuji, Tokyo 100-7015 (JP)
(74) Representative: MFG Patentanwälte Meyer-Wildhagen Meggle-Freund Gerhard PartG mbB
(86) International application number: PCT/JP2022/010820
(87) International publication number: WO 2023/013131

(57) **Abstract**

An information processing system capable of switching a function of a terminal device according to a situation is provided. The information processing system 1 includes a terminal device 100 that includes a sensor 109 and performs analysis processing on data from the sensor 109, and a server 300 that performs data transmission with the terminal device 100 via wireless communication, the information processing system 1 including an analysis operation setting control unit 102 that controls an analysis operation setting that is a setting of the terminal device 100 for performing the analysis processing on the data from the sensor 109, in which the analysis operation setting control unit 102 controls the analysis operation setting in such a manner as to enable performing optimum analysis.

## Description

### Technical Field

The present invention relates to an information processing system and an information processing program.

### Background Art

In recent years, techniques for executing various processes by analysis using artificial intelligence (AI) have been developed. However, in order to execute AI analysis, a certain degree of processing capability is necessary. For example, the technology of Patent Literature 1 provides a computer system that performs machine learning using an edge device (terminal device) connected to a gateway. In this technology, whether to execute machine learning or to execute only transmission of data necessary for machine learning to be executed by another computer is selected and executed depending on processing capabilities of a plurality of edge devices.

### Citation List

### Patent Literature

Patent Literature 1: WO 18/100678 A

### Summary of Invention

### Technical Problem

However, in the related art, switching between causing the terminal device to perform machine learning and causing the terminal device to transmit data is executed as part of system update of the terminal device. Thus, in the prior art, only one selected function can be executed during system activation, and the function of the terminal device cannot be switched according to the situation.

Therefore, an object of the present invention is to provide an information processing system and an information processing program capable of switching a function of a terminal device according to a situation.

### Solution to Problem

The above object of the present invention is achieved by the following means.
(1) An information processing system including
   a terminal device that includes a sensing device and performs analysis processing on data from the sensing device, and
   a server that performs data transmission with the terminal device via wireless communication, the information processing system including:
      a control unit that controls an analysis operation setting that is a setting of the terminal device for performing the analysis processing on the data from the sensing device, in which
      the control unit controls the analysis operation setting in such a manner as to enable performing optimum analysis.
(2) The information processing system according to (1) above, in which
   the analysis processing by the terminal device is processing by a machine learning model of artificial intelligence, and
   the control of the analysis operation setting by the control unit includes a change of the machine learning model.
(3) The information processing system according to (1) or (2) above, in which the control unit changes the analysis operation setting according to an analysis result by the analysis processing.
(4) The information processing system according to any one of (1) to (3) above, in which the terminal device is movable.
(5) The information processing system according to (4) above, in which the control unit designates a destination of the terminal device according to an analysis result by the analysis processing.
(6) The information processing system according to (4) or (5) above, in which the control unit changes the analysis operation setting according to a position of the terminal device.
(7) The information processing system according to any one of (1) to (6) above, in which the control unit changes the analysis operation setting according to a distance from the terminal device to a sensing target by the sensing device.
(8) The information processing system according to any one of (1) to (7) above, in which
   the sensing device is a camera that captures a moving image, and
   the control unit changes the analysis operation setting according to a moving distance between frames of a target object shown in the moving image.
(9) The information processing system according to any one of (1) to (8) above, in which in the control unit, the control of the analysis operation setting by the control unit includes switching between operation and non-operation of the sensing device.
(10) The information processing system according to any one of (1) to (9) above, further including:
   a plurality of the terminal devices, in which
   the control unit controls the analysis operation setting for each of the terminal devices.
(11) The information processing system according to (9) above, in which
   each of the plurality of the terminal devices transmits data of the sensing device and/or an analysis result by the analysis processing to the server,
   the server includes a storage unit that stores the data of the sensing device and/or the analysis result by the analysis processing in association with the terminal device that has transmitted the data and/or the analysis result, and
   the control unit controls the analysis operation setting of each of the terminal devices on the basis of the data of the sensing device and/or the analysis result by the analysis processing stored in the storage unit.
(12) The information processing system according to (10) or (11) above, in which the control unit selects the terminal device to be caused to execute the analysis processing from among the plurality of terminal devices on the basis of the analysis result by the analysis processing.
(13) The information processing system according to any one of (10) to (12) above, in which the control unit selects the terminal device to be caused to execute the analysis processing according to a position of each of the plurality of the terminal devices.
(14) An information processing program for controlling a terminal device in an information processing system including
   the terminal device that includes a sensing device and performs analysis processing on data from the sensing device, and
   a server that performs data transmission with the terminal device via wireless communication, the information processing program causing a computer to execute:
      a step of controlling an analysis operation setting that is a setting of the terminal device in such a manner as to enable the terminal device that performs the analysis processing on the data from the sensing device to perform optimum analysis.
(15) The information processing program according to (14) above, in which
   the analysis processing by the terminal device is processing by a machine learning model of artificial intelligence, and
   the step of controlling the analysis operation setting includes a change of the machine learning model.
(16) The information processing program according to (14) or (15) above, in which in the step of controlling the analysis operation setting, the analysis operation setting is changed according to an analysis result by the analysis processing.
(17) The information processing program according to any one of (14) to (16) above, in which the terminal device is movable.
(18) The information processing program according to (17) above, in which in the step of controlling the analysis operation setting, a destination of the terminal device is designated according to an analysis result by the analysis processing.
(19) The information processing program according to (17) or (18) above, in which in the step of controlling the analysis operation setting, the analysis operation setting is changed according to a position of the terminal device.
(20) The information processing program according to any one of (14) to (19) above, in which in the step of controlling the analysis operation setting, the analysis operation setting is changed according to a distance from the terminal device to a sensing target by the sensing device.
(21) The information processing program according to any one of (14) to (20) above, in which
   the sensing device is a camera that captures a moving image, and
   in the step of controlling the analysis operation setting, the analysis operation setting is changed according to a moving distance between frames of a target object shown in the moving image.
(22) The information processing program according to any one of (14) to (21) above, in which the step of controlling the analysis operation setting includes switching between operation and non-operation of the sensing device.
(23) The information processing program according to any one of (14) to (22) above, in which
   a plurality of the terminal devices is included, and
   in the step of controlling the analysis operation setting, the analysis operation setting is controlled for each of the terminal devices.
(24) The information processing program according to (23) above, in which
   each of the plurality of the terminal devices transmits data of the sensing device and/or an analysis result by the analysis processing to the server,
   the server includes a storage unit that stores the data of the sensing device and/or the analysis result by the analysis processing in association with the terminal device that has transmitted the data and/or the analysis result, and
   in the step of controlling the analysis operation setting, the analysis operation setting of each of the terminal devices is controlled on the basis of the data of the sensing device and/or the analysis result by the analysis processing stored in the storage unit.
(25) The information processing program according to (23) or (24) above, in which in the step of controlling the analysis operation setting, the terminal device to be caused to execute the analysis processing is selected from among the plurality of the terminal devices on the basis of the analysis result by the analysis processing.
(26) The information processing program according to any one of (23) to (25) above, in which in the step of controlling the analysis operation setting, the terminal device to be caused to execute the analysis processing is selected according to a position of each of the plurality of the terminal devices.

### Advantageous Effects of Invention

In the present invention, in a terminal device having a sensing device, operation setting of analysis processing executed by the terminal device is controlled. Accordingly, in the present invention, analysis of data from the sensing device by the terminal device can be optimized according to the situation in which the terminal device is placed.

### Brief Description of Drawings

Fig. 1 is a block diagram illustrating a schematic configuration of an information processing system 1 according to a first embodiment.
Fig. 2 is a block diagram for describing functions of the information processing system according to the first embodiment.
Fig. 3 is a block diagram illustrating an example of a hardware configuration of a terminal device.
Fig. 4 is a block diagram schematically illustrating hardware constituting a server.
Fig. 5 is a flowchart illustrating a processing procedure in the first embodiment.
Fig. 6 is a flowchart illustrating the processing procedure in the first embodiment.
Fig. 7 is a block diagram illustrating a schematic configuration of an information processing system according to a second embodiment.
Fig. 8 is a block diagram for describing functions of the information processing system according to the second embodiment.
Fig. 9 is a block diagram for describing functions of the information processing system according to the second embodiment.
Fig. 10 is a flowchart illustrating a processing procedure in the second embodiment.
Fig. 11 is a flowchart illustrating the processing procedure in the second embodiment.

### Description of Embodiments

Hereinafter, embodiments of the present invention will be described with reference to the accompanying drawings. Note that in the description of the drawings, the same elements are denoted by the same reference numerals, and redundant description will be omitted. Further, dimensional ratios in the drawings are exaggerated for convenience of description, and may be different from actual ratios.

### (First embodiment)

### (Information processing system)

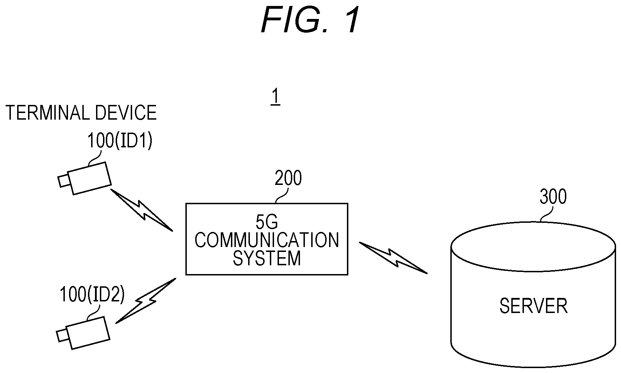

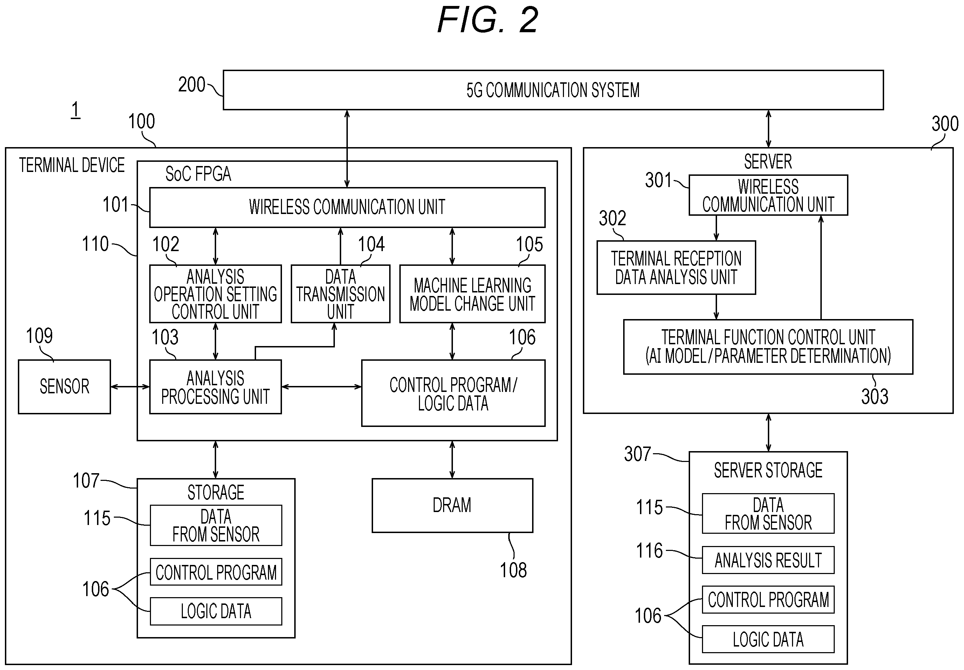

Fig. 1 is a block diagram illustrating a schematic configuration of an information processing system 1 according to a first embodiment. Fig. 2 is a block diagram for describing functions of the information processing system 1 according to the first embodiment.

As illustrated in Figs. 1 and 2, the information processing system 1 according to the first embodiment includes a terminal device 100, a 5G communication system (hereinafter, referred to as a communication system 200), and a server 300.

### (Terminal device)

The terminal device 100 includes a sensing device (hereinafter, simply referred to as a sensor 109 (to be described in detail later)), and transmits information (data) detected by the sensor 109 to the server 300. Further, the terminal device 100 executes analysis by artificial intelligence (AI) using the data from the sensor 109.

Such a terminal device 100 is also referred to as an edge device, an edge terminal, or the like, and is an electronic device that can also be used for Internet of Things (IoT). The terminal device 100 is, for example, a portable terminal device such as a smartphone or a tablet computer, a monitoring camera device in which a wireless device and a computer for processing are attached to (built in) a camera, or the like.

As illustrated in Fig. 2, the function of the terminal device 100 includes a wireless communication unit 101, an analysis operation setting control unit 102, an analysis processing unit 103, a data transmission unit 104, and a machine learning model change unit 105. In the first embodiment, these units are configured by System-on-a-Chip Field-Programmable Gate Array (SoCFPGA) (to be described in detail later). Further, in the terminal device 100, a storage 107 and the sensor 109 are connected (or integrated). In addition, a memory such as a DRAM 108 may be connected (or integrated) to the terminal device 100 separately from a memory (such as the DRAM) inside the SoCFPGA. The separately connected memory may be a non-volatile memory that operates at a high speed, such as a flash memory, instead of the DRAM 108 or together with the DRAM 108.

The wireless communication unit 101 executes communication by 5G with the communication system 200. The wireless communication unit 101 transmits data from the terminal device 100 to the server 300 via the communication system 200. Further, the wireless communication unit 101 receives data transmitted from the server 300 via the communication system 200.

The analysis operation setting control unit 102 controls a setting (analysis operation setting) for performing analysis processing on the data acquired from the sensor 109. The analysis operation setting control unit 102 is a control unit that controls the analysis operation setting in such a manner as to enable performing optimum analysis.

As the analysis operation setting, for example, there is a machine learning model based on artificial intelligence (AI) executed by the analysis processing unit 103. The machine learning model based on AI is machine-learned in advance by AI. In the present embodiment, a machine learning model based on AI is referred to as an AI model. The AI model outputs an analysis result with respect to the input from the sensor 109. The analysis content by the AI model includes, for example, recognition of a person or an object in an image (frame), recognition of a face or a skeleton of a person, recognition of movement of a person (or an object), determination of an attribute of a person (or an object), and the like. The AI model is changed according to the analysis content. The analysis operation setting control unit 102 changes the machine learning model (AI model) in accordance with the recognized person or object, movement thereof, or the like in order to further continue the analysis or perform another analysis.

Further, as the analysis operation setting, there is a setting of the sensor 109 provided in the terminal device 100. The setting of the sensor 109 is the resolution of an image (moving image or still image) captured in a case where the sensor 109 is a camera that captures a moving image. Further, in a case where the sensor 109 is a camera (also referred to as a movie camera) that captures a moving image, there is a frame rate in addition to the resolution. Furthermore, in a case where the sensor 109 is a camera with a zoom lens, there is magnification of the zoom lens in addition to these. These settings of the sensor 109 are provided as parameters, and the analysis operation setting control unit 102 sets the sensor 109 on the basis of the parameters.

Specifically, for example, the analysis operation setting control unit 102 changes the frame rate according to the moving distance between the frames of a target object shown in the frame of the moving image. Here, the target object is an object to be detected and/or recognized by analysis using the AI model, and is, for example, a person, an animal, an object, or the like. For example, when the frame rate is doubled, the moving distance of the target object between the frames is halved. In a case where a fast-moving target object is recognized, the target object can be captured in many frames by increasing the frame rate, and the contour and the motion of the target object can be clearly and reliably analyzed.

Further, for example, in a case where the sensor 109 is a camera with a zoom lens, the analysis operation setting control unit 102 changes the magnification of the zoom lens. Changing the magnification of the zoom lens changes the angle of view. For example, when it is determined that a person is shown in a captured image (frame), the analysis operation setting control unit 102 changes the magnification so as to zoom up the person. Whether or not a person is shown in the frame is determined by analysis using AI. In addition, the magnification of the zoom lens may be changed according to the distance from the sensor 109 (or the main body of the terminal device 100) to the capturing target (the target object that is a sensing target).

Further, the analysis operation setting includes setting of operation and non-operation of the terminal device 100 itself. For example, in a case where the terminal device 100 is not temporarily used, the analysis operation setting control unit 102 sets the terminal device that is not used to the non-operation state.

Further, the analysis operation setting includes setting of operation and non-operation of the sensor 109. For example, in a case where the sensor 109 is not temporarily used, the analysis operation setting control unit 102 sets the sensor 109 that is not used to non-operation.

These setting changes may be performed on the basis of an analysis result of the terminal device 100 alone, or may be performed by a command from the server 300.

Further, the analysis operation setting control unit 102 restarts the terminal device 100 (at least the function of the analysis processing unit 103) as necessary at the time of setting change.

The analysis processing unit 103 analyzes the data from the sensor 109 using the AI model. The analysis content is, for example, recognition of a person (or an object) in an image (frame), recognition of movement of a person (or an object), determination of an attribute of a person (or an object), and the like. The AI model is provided as a result of machine learning (including deep learning) performed in advance by the AI. The machine learning itself is performed in advance according to an analysis purpose. The machine learning may be performed by the terminal device 100, but may be performed in advance by another computer according to the analysis purpose.

The AI model is provided as a control program and/or logic data 106 or the like on the basis of the hardware configuration of the terminal device 100. Although the hardware configuration of the terminal device 100 will be described later, for example, in a case where the hardware configuration mainly includes a CPU, the AI model is provided as a control program. Alternatively, in a case where the hardware configuration includes rewritable hardware such as an FPGA, the AI model is provided as logic data. The logic data may also be referred to as programmable logic. In the case of the FPGA, part or all of the settings may be provided as a control program. Note that, in the present embodiment, an FPGA (to be described in detail later) will be described as an example.

The AI model is transmitted from the server 300 in response to a request from the analysis operation setting control unit 102 or in response to determination on the server 300 side. The AI model transmitted from the server 300 is temporarily stored in the memory in the FPGA or the DRAM 108 through the machine learning model change unit 105. The analysis processing unit 103 reads the temporarily stored AI model and executes analysis processing.

The AI model used so far may be left as it is in the memory in the FPGA or the DRAM 108. However, since the memory in the FPGA or the storage capacity of the DRAM 108 is limited, the AI model used until then may be erased by the machine learning model change unit 105, and only the newly supplied AI model may be stored. The AI model erased from the memory in the FPGA or the DRAM 108 may be stored in the storage 107 when the storage 107 is connected.

The analysis result by the analysis processing unit 103 is transmitted to the analysis operation setting control unit 102. The analysis operation setting control unit 102 executes various analysis operation settings described above on the basis of the analysis result. Further, the analysis result by the analysis processing unit 103 is also transmitted from the data transmission unit 104 to the server 300 according to the setting. The setting as to whether or not to transmit the analysis result to the server 300 is set by the analysis operation setting control unit 102 according to a command from the server 300.

The storage 107 is a storage unit. The storage 107 stores data 115 from the sensor 109. In addition, the storage 107 may store the control program and/or logic data 106 which is the AI model executed by the terminal device 100. By storing these in the storage 107, when the AI model is changed, if the control program and/or logic data 106 and other device settings to be changed are present in the storage 107, the analysis operation setting control unit 102 can read and use them from the storage 107 without making a request to the server 300. Consequently, data transmission from the server 300 may be unnecessary, and thus a communication load can be reduced.

Note that it is not necessary to store all the data as described above in the storage 107, and it is sufficient if the capacity of the storage 107 is determined in accordance with the cost or the like of the terminal device 100, and the content to be stored is determined or changed in accordance with the capacity.

In addition, the storage 107 may not be provided. As described above, the AI model (the control program and/or logic data 106) used in the terminal device 100 is transmitted from the server 300. By not providing the storage 107, the cost of the terminal device 100 can be further reduced.

The sensor 109 is, for example, an image sensor. The image sensor is, for example, a still camera (still image capturing camera), a movie camera (moving image capturing camera), or the like that mainly detects visible light. Further, the image sensor is an infrared camera, a thermo camera (temperature detection camera), or the like. The infrared camera and the thermo camera can also capture still images and moving images. In addition, as the sensor 109, for example, various sensors 109 such as an acoustic sensor that detects sound like a microphone, an altitude sensor that detects altitude (altitude), an atmospheric pressure sensor, a depth sensor (water pressure sensor) in water, a vibration sensor, an azimuth sensor, an angle sensor, a temperature sensor, a voltage sensor, a current sensor, and a power sensor can be used. Data detected by these sensors 109 is transmitted to the server 300 as necessary. Further, the data detected by the sensor 109 is also stored in the storage 107 as necessary.

Only one such sensor 109 may be connected (also integrated, the same applies below) to one terminal device 100, or a plurality of such sensors may be connected to one terminal device 100. In a case where a plurality of sensors 109 is connected to one terminal device 100, the plurality of sensors 109 may be of the same type or of different types.

Further, a result of sensing by the sensor 109 (for example, moving image data) is also transmitted from the data transmission unit 104 to the server 300 according to the setting. Whether or not to transmit the sensing result to the server 300 is set by the analysis operation setting control unit 102 according to a command from the server 300.

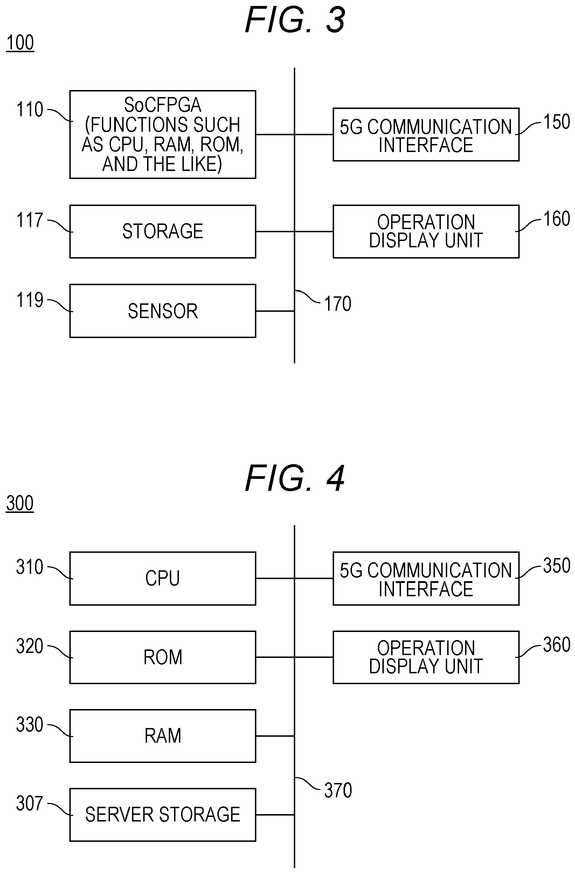

Fig. 3 is a block diagram illustrating an example of a hardware configuration of the terminal device 100.

In the present embodiment, a case of an FPGA will be described as an example.

As illustrated in Fig. 3, the terminal device 100 includes a SoCFPGA 110, the storage 107, a 5G communication interface 150, and an operation display unit 160.

The SoCFPGA 110 is a semiconductor element (including a semiconductor element with a plurality of chips bonded together), and as a system, an FPGA that is rewritable the details of processing to be executed is formed on a single chip. The SoCFPGA 110 may also be referred to as a programmable SoC. In the SoCFPGA 110, functions such as a central processing unit (CPU) serving as an arithmetic element, a read only memory (ROM) serving as a storage element (memory), and a random access memory (RAM) are formed in one chip (or a plurality of chips having a plurality of these functions is integrated). In addition, the SoCFPGA 110 may be equipped with an accelerator such a GPU (graphics processing unit)/DSP (digital signal processor). Thus, the terminal device 100 is a computer.

Such an SoCFPGA 110 stores the control program and/or logic data 106 necessary for operation (including rewriting of a gate circuit in the FPGA), and executes the control program and/or logic data to implement the functions of the respective components of the terminal device 100 described above. Therefore, the SoCFPGA 110 functions as the analysis operation setting control unit 102, the analysis processing unit 103, the data transmission unit 104, and the machine learning model change unit 105.

The storage 107 is a storage medium such as an embedded Multi Media Card (eMMC), a solid state drive (SSD), or a hard disk drive (HDD). Alternatively, the storage 107 may be a portable storage medium such as a memory card.

The 5G communication interface 150 is the wireless communication unit 101 for communicating with the communication system 200, and includes a chip of a communication module. The 5G communication interface 150 may also be integrated as the SoCFPGA 110. Note that the terminal device 100 may be provided with, for example, a network interface based on standards such as Ethernet (registered trademark) and IEEE 1394, a wireless communication interface such as Bluetooth (registered trademark) and IEEE 802.11, and the like, in addition to the communication interface based on 5G.

The operation display unit 160 is, for example, a touch panel display, displays various types of information, and receives various inputs from the user. In addition, depending on the terminal device 100, an input device such as a keyboard or a mouse may be connected to a monitor or the like.

For the hardware of the terminal device 100, the control program is a program mainly executed by a CPU of the terminal device 100 or a circuit of a CPU function in an FPGA. On the other hand, the logic data is mainly data for rewriting circuit data of the FPGA.

Note that the terminal device 100 is not limited to the SoCFPGA 110, and may be an FPGA other than the SoC, or may be in a form in which a CPU, a RAM, a ROM, and the like are independent and connected by a bus.

### (Communication system)

The communication system 200 has a wireless communication function by 5G and controls communication between the terminal device 100 and the server 300. The communication system 200 may be a 5G public line, or may be the communication system 200 called private 5G used only by a specific user.

Although not illustrated, the communication system 200 is a known 5G communication system, has a wireless communication control function, a relay processing function, and the like, and connects the terminal device 100 and the server 300 by 5G communication.

### (Server)

The server 300 stores the analysis result transmitted from the terminal device 100, stores the control program and/or logic data 106 and the like needed by the terminal device 100, and supplies the control program and/or the logic data to the terminal device 100. The function of the server 300 will be described with reference to Fig. 2.

The server 300 includes a wireless communication unit 301, a terminal reception data analysis unit 302, and a terminal function control unit 303. In a case where the terminal device 100 is referred to as an edge terminal, the server 300 may be referred to as an edge server in contrast thereto. A storage 307 is connected to the server 300 (the storage 307 is referred to as a server storage 307 to be distinguished from the storage 107 of the terminal device 100). The server storage 307 is a storage unit. The server storage 307 stores data 115 collected by the sensor 109 of the terminal device 100, an analysis result 116 by the terminal device 100, the control program and/or logic data 106 used by the terminal device 100, and the like. The server 300 may be referred to as a cloud server because of its role as a storage device.

The wireless communication unit 301 executes communication by 5G with the communication system 200. The wireless communication unit 301 transmits data from the server 300 to the terminal device 100 via the communication system 200. Further, the wireless communication unit 301 receives data transmitted from the terminal device 100 via the communication system 200.

The terminal reception data analysis unit 302 analyzes and/or learns data received from the terminal device 100 via the wireless communication unit 301. The analysis and/or learning in the terminal reception data analysis unit 302 is analysis of large or a large amount of data that cannot be processed by the terminal device 100. Further, the terminal reception data analysis unit 302 executes machine learning using the data collected by the terminal device 100 and constructs an AI model. Typically, the server 300 has higher performance and higher functionality than the terminal device 100, and thus is suitable for analysis and/or learning that handles such large or a large amount of data.

The terminal function control unit 303 determines the AI model and setting to be executed by the terminal device 100 according to a result of analysis and/or learning by the terminal reception data analysis unit 302. The function of such a terminal function control unit 303 is similar to the function of the analysis operation setting control unit 102 of the terminal device 100. Therefore, the terminal function control unit 303 functions as a control unit.

Further, the terminal function control unit 303 determines a necessary AI model and parameter according to the request of the analysis operation setting control unit 102 of the terminal device 100. For example, when there is an analysis result that a person is recognized and a request for a setting change corresponding thereto from the analysis operation setting control unit 102 of the terminal device 100, the terminal function control unit 303 determines a setting necessary for zooming up, reads setting data (control program and/or logic data 106) for the setting from the server storage 307, and transmits the setting data to the terminal device 100.

Further, the terminal function control unit 303 classifies the data received from the plurality of terminal devices 100 for each terminal device 100 and stores the classified data in the server storage 307. For example, the terminal function control unit 303 stores the data of the sensor 109 and the data of the analysis result transmitted from each terminal device 100 in the server storage 307 in association with the ID assigned to each terminal device 100. The ID is assigned to the terminal device 100, for example, as illustrated in Fig. 1. Here, one terminal device 100 is assigned with DI1, and the other terminal device 100 is assigned with ID2. In addition, the terminal function control unit 303 may execute data compression as necessary when storing the data 115 and the analysis result 116. In a case where data is compressed, the terminal function control unit 303 decompresses data to be read when the data is read.

Fig. 4 is a block diagram schematically illustrating hardware constituting the server 300.

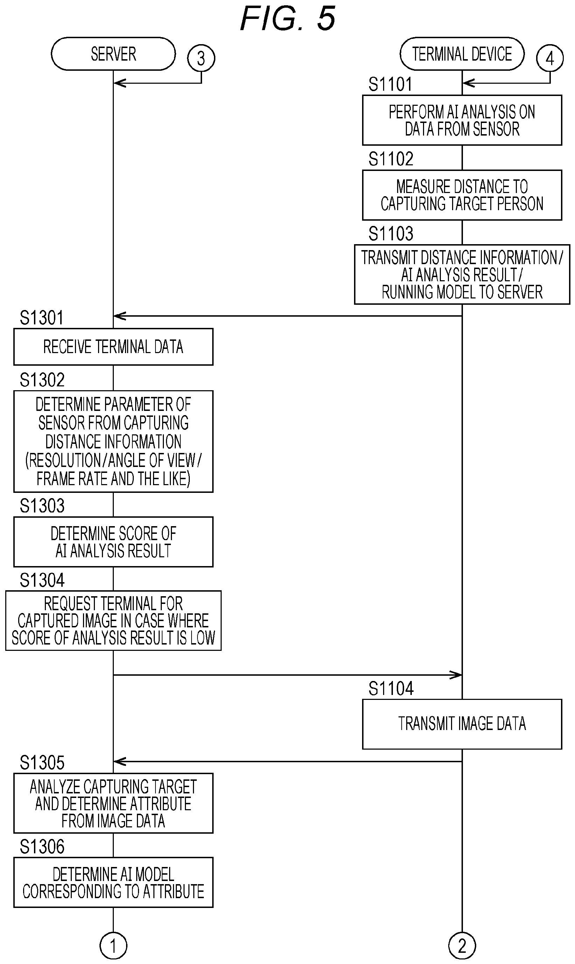

The server 300 is a computer. As illustrated in Fig. 5, the server 300 includes a CPU 310, a ROM 320, a RAM 330, a server storage 307, a 5G communication interface 350, and an operation display unit 360. The respective components are communicably connected to each other via a bus 370.

The CPU 310 executes the function of each unit of the server 300 described above by executing a program recorded in the ROM 320 or the server storage 307.

The ROM 320 stores various programs and various data.

The RAM 330 temporarily stores programs and data as a work area.

The server storage 307 stores various programs including an operating system and various data. The server storage 307 stores the control program and/or logic data 106.

In the case of the server 300, a large-capacity storage medium such as an HDD is mainly used as the server storage 307. In addition, in the server storage 307, a semiconductor storage medium such as an eMMC or an SSD may be used together with the HDD or instead of the HDD.

The 5G communication interface 350 is the wireless communication unit 301 for communicating with the communication system 200.

The operation display unit 360 is, for example, a touch panel display, displays various types of information, and receives various inputs from the user. In addition, as the operation display unit 360, an input device such as a keyboard or a mouse and a monitor may be connected.

### (Processing procedure)

Next, a processing procedure in the first embodiment will be described.

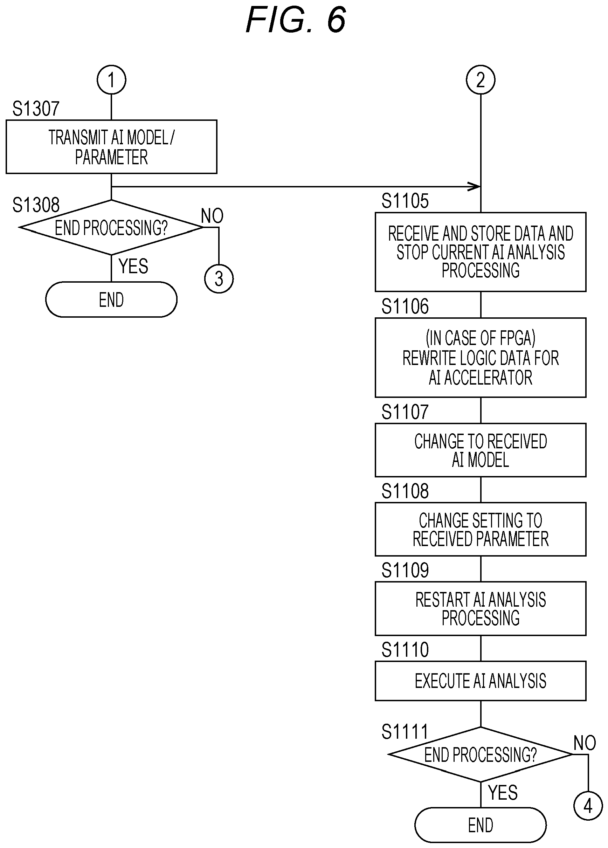

Figs. 5 and 6 are flowcharts illustrating a processing procedure in the first embodiment. Here, the processing procedure will be described on the basis of the following premise. The terminal device 100 is a monitoring camera that includes the sensor 109 and monitors intrusion of a person. Further, the terminal device 100 performs recognition processing of a person by AI. Then, from the server 300 side, the setting of the terminal device 100 is changed according to the analysis result of the terminal device 100.

Here, a processing procedure by the terminal device 100 and a processing procedure of the server 300 will be described. Note that, since the communication system 200 merely controls communication between the terminal device 100 and the server 300, description of a processing procedure thereof is omitted (the same applies to processing procedures of other embodiments).

First, the terminal device 100 monitors a predetermined place (in a facility or the like) by the sensor 109. Then, the terminal device 100 recognizes that there is a person in the image (frame) by performing AI analysis on data from the sensor 109 (S1101). The AI analysis is executed by the analysis processing unit 103 with the AI model set at this stage.

Subsequently, the terminal device 100 measures a distance to the recognized person (sensing target) (S1102). For example, in a case where the sensor 109 is a camera, a distance measuring function of the camera may be used to measure the distance. In addition, a distance measuring sensor may be used for measuring the distance separately from the camera. As the distance measuring sensor, for example, a depth camera, a LiDAR, or the like may be used.

Subsequently, the terminal device 100 transmits distance information, an AI analysis result, and a running model to the server 300 (S1103). The distance information is the measurement result in S1102. The AI analysis result is a result of recognizing the presence of a person in the frame. The running model is the control program and/or logic data 106 of the AI model currently executed in the terminal device 100. The AI model at this stage is the control program and/or logic data 106 for recognizing a person.

The server 300 receives the data transmitted from the terminal device 100 (S1301). The received data is the distance information, the AI analysis result, and the running model transmitted in S 1103. The server 300 stores the received data in the server storage 307 together with the ID of the terminal device 100 that has transmitted the data.

Subsequently, the server 300 determines a parameter of the sensor 109 from the received distance information (S 1302). Parameters of the sensor 109 are, for example, resolution, an angle of view (zoom magnification), a frame rate, and the like.

Subsequently, the server 300 determines a score of the AI analysis result (S1303).

Subsequently, in a case where the score of the analysis result is low, the server 300 requests the terminal device 100 to transmit image data (S1304). At this stage, the image data is not transmitted from the terminal device 100 to the server 300. Note that, in a case where the AI score is equal to or more than a predetermined value, the server 300 does not execute the step of S1304.

Subsequently, the terminal device 100 that has received the parameter and the image request transmits data of the image (moving image) captured by the sensor 109 to the server 300 (S1104).

Subsequently, the server 300 analyzes and determines the attribute of the person recognized from the received image data (S 1305). The attribute determination requires more advanced processing than recognition of a person from within a frame. That is, high processing capability as a computer is necessary. Thus, in the first embodiment, analysis is performed on the server 300 side.

Subsequently, the server 300 determines the AI model corresponding to the determined attribute (S 1306).

Subsequently, the server 300 transmits the determined AI model and parameter to the terminal device 100 (S1307).

Thereafter, when there is no instruction to end the processing (S1308: NO), the server 300 returns to S1301 and continues the subsequent processing. If there is an instruction to end the process (S1308: YES), the server 300 ends the process (END).

Subsequently, the terminal device 100 receives and stores the data from the server 300, and stops the current AI analysis processing (S1105).

Subsequently, the terminal device 100 rewrites logic data for an AI accelerator (in the case of the FPGA) (S1106). Note that, in the case of a configuration other than the FPGA, a control program for executing the AI model is installed in the terminal device 100.

Subsequently, the terminal device 100 changes to the AI model received from the server 300 (S1107).

Subsequently, the terminal device 100 changes the setting of the terminal device 100 to the parameter received from the server 300 (S1108).

Subsequently, the terminal device 100 restarts the processing of AI analysis (S1109).

Subsequently, the terminal device 100 executes AI analysis processing (S1110).

Thereafter, when there is no instruction to end the processing (S1111: NO), the terminal device 100 returns to S1101 and continues the subsequent processing. On the other hand, when there is an instruction to end the processing (S1111: YES), the terminal device 100 ends the processing (end).

### (Operation)

Next, an operation of the first embodiment will be described with specific examples. In the following description, the S number corresponds to the procedure described above. Note that the specific examples described here are merely for describing the embodiments, and the present invention is not limited to such specific examples.

At present, in the IoT system, data from the sensing device (sensor 109) mounted on the edge terminal (terminal device 100) is transferred to the server 300, and AI analysis is performed using powerful hardware resources. In such an IoT system, there is a problem that the amount of data transferred from the terminal device 100 to the server 300 becomes enormous as the content to be analyzed becomes more advanced. In order to solve this problem, the present embodiment causes the terminal device 100 side having few hardware resources to execute various AI analysis according to its processing capability. For this purpose, in the present embodiment, the AI model used on the terminal device 100 side is changed according to the analysis content.

For example, in a case where a camera is used as the sensing device, the change of the AI model is executed in a case where the capturing target enters a blind spot of the camera, the direction of the face does not face the direction of the camera, or the movement of the capturing target is too fast and soon goes out of frame, or the like.

In the first embodiment, the AI model is changed in such a case by the terminal device 100 communicating (transmitting data) with the server 300 through the communication system 200. In the first embodiment, by appropriately correcting the setting according to the motion and the positional relationship of the capturing target or the AI model, the terminal device 100 continues the analysis following the motion of the capturing target.

Further, for example, in the terminal device 100, in a case where the person itself or the movement of the person is recognized by skeleton detection by AI, a person in front can be detected as a skeleton, but a person in the back cannot be detected in some cases. In such a case, in skeleton detection, detection can be performed by changing the resolution.

For example, in a case where an action of a worker in a factory or an office is detected, the terminal device 100 is caused to execute analysis using an AI model of skeleton detection (S1101). Thus, the terminal device 100 can analyze the change in movement of joint points of the worker and detect the occurrence of abnormality such as falling or dangerous behavior of the worker.

In this detection operation, the terminal device 100 recognizes the coordinates of each joint point. For example, the terminal device 100 determines the distance between the capturing target and the camera from the coordinates of the head (S 1102). In such skeleton detection, it is easier to determine when the person is captured in a large image. Thus, the person can be accurately determined at a distance close to the sensor 109, but the analysis accuracy may deteriorate when the person moves away from the sensor 109.

Thus, the server 300 determines a necessary parameter based on the distance information (from S1103 to S1302) with the capturing target (here, a person) received from the terminal device 100 (S1302). Specifically, in a case where the distance between the terminal device 100 and the capturing target exceeds, for example, a threshold value, the server 300 changes the parameter of the resolution of the sensor 109 so that the server 300 can perform analysis with higher resolution. For example, High Definition (720P) (HD) is changed to Full High Definition (1080p) (FHD). In addition, as the parameter to be changed, for example, by zooming up and changing the angle of view in addition to the resolution, the accuracy of skeleton detection is improved.

There are two patterns for changing the AI model. In a case where the score of the analysis result is low, the first pattern is changed to a different AI model with the same function. The second pattern is changed to an AI model having different functions as a result of analysis on the terminal device 100 side.

The first embodiment is a first pattern. The second pattern will be described in a second embodiment described later.

In a case where the score of the analysis result is low (S1303), the server 300 requests the captured image from the terminal device 100 (S1304), receives the image from the terminal device 100, and analyzes the image by the server 300 (S1104 to S1305). As a result, the attribute of the capturing target is determined, and the optimal AI model is determined (S1306). For example, in a case where the terminal device 100 uses an AI model learned mainly by Japanese, if the model is used for a foreign worker, the score may be poor. As a result of the analysis, when a foreigner is determined as an attribute, the server 300 selects an AI model according to the result.

The server 300 transmits the determined AI model together with the parameter to the terminal device 100 (S1307). Thus, the terminal device 100 executes change/setting change of the AI model and the parameter according to the instruction from the server 300. The terminal device 100 changes to the received AI model, restarts the system (analysis processing unit 103), and executes analysis using the changed AI model and setting (S1105 to S1110).

In the change of the AI model, when the AI analysis is performed by the accelerator in the FPGA, the logic data is partially rewritten after the processing of the AI analysis is stopped. In a case where the AI processing is performed by a device other than the FPGA, only the change of the AI model is performed.

As described above, in the first embodiment, in a case where there is a capturing target at a certain distance or more (or in a case where the capturing target moves), the setting of the parameter is changed so that an image can be captured with high resolution. In the present embodiment, by not always performing analysis with high resolution, power consumption can be suppressed, and the amount of data when image data is transmitted to the server 300 can be reduced.

As described above, in the present embodiment, the setting is changed in such a manner as to enable the terminal device 100 to execute the optimum analysis operation according to the situation where the terminal device 100 is placed, such as the analysis content and the information acquired by the sensor 109. Thus, in the present embodiment, analysis suitable for the hardware resource of the terminal device 100 can be appropriately executed. Moreover, in the present embodiment, the setting can be changed substantially in real time using the analysis result in the terminal device 100. In addition, in the present embodiment, since the amount of data to be transmitted to the server 300 can also be reduced, the load on the communication system 200 can be reduced.

### (Second embodiment)

### (Information processing system)

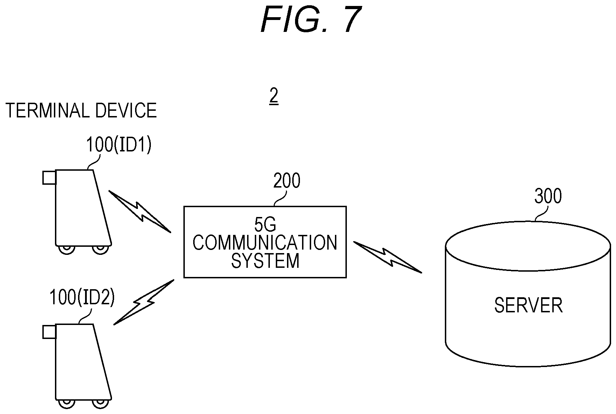

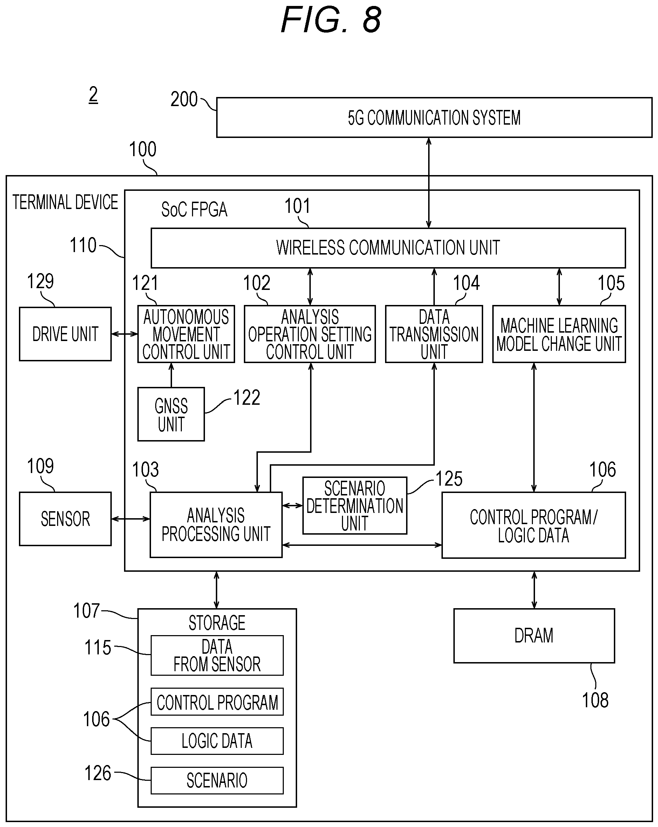

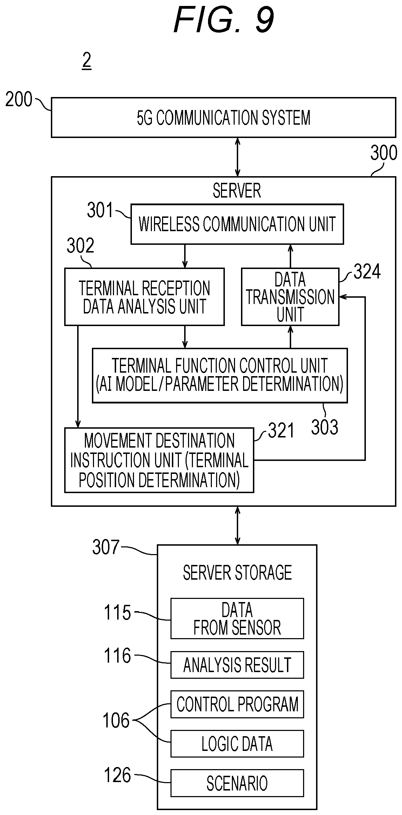

Fig. 7 is a block diagram illustrating a schematic configuration of an information processing system 2 according to a second embodiment. Figs. 8 and 9 are block diagrams for describing functions of the information processing system 1 according to the second embodiment. Fig. 8 is a diagram illustrating a terminal device part, and Fig. 9 is a diagram illustrating a server part.

The terminal device 100 of the information processing system 2 according to the second embodiment is movable.

### (Terminal device)

As illustrated in Fig. 7, the terminal device 100 of the second embodiment is a robot that autonomously moves. The robot includes a sensing device (sensor 109). As illustrated in Fig. 8, the terminal device 100 includes an autonomous movement control unit 121, a global navigation satellite system (GNSS) unit 122, and a drive unit 129 for autonomous movement. The drive unit 129 includes, for example, a motor, a wheel (including an axle) driven by the motor, a power source for the motor, a steering device, and the like. Further, the terminal device 100 includes a scenario determination unit 125.

In the second embodiment, a setting related to movement of the terminal device 100 is added as the analysis operation setting, and the analysis operation setting control unit 102 also changes the setting related to movement. Other analysis operation settings are similar to those in the first embodiment.

In addition, since other functions of the terminal device 100 are similar to those of the first embodiment, the description thereof will be omitted.

The autonomous movement control unit 121 controls the drive unit 129 on the basis of position information measured by the GNSS unit 122 to move the terminal device 100.

As is well known, the GNSS unit 122 is a positioning system using a satellite, and recognizes the coordinates of the current position of the terminal device 100 itself. Examples of the global navigation satellite system include a GPS (global positioning system) in the United States, a QZSS (quasi-zenith satellite system) in Japan, GLONASS in Russia, Galileo in the European Union, and the like.

Note that the positioning of the current position of the terminal device 100 is not limited to GNSS, and for example, a dedicated wireless positioning system may be used in a specific space. In addition, the positioning of the current position of the terminal device 100 may be performed by a positioning system using not only satellite radio waves but also radio waves from a base station of a public portable communication line. In addition, the positioning of the current position of the terminal device 100 may be performed by combining the GNSS unit 122 and an inertial measurement unit (IMU).

The position of the terminal device 100 is set as one of the analysis operation settings by the analysis operation setting control unit 102. For this purpose, the analysis operation setting control unit 102 sets the position of a destination and the route to the position as coordinate values and positions on the map data to the autonomous movement control unit 121. The autonomous movement control unit 121 controls the drive unit 129 to move from the current position of the terminal device 100 to the set coordinate values or position on the map data.

The destination of the terminal device 100 is instructed by the analysis operation setting control unit 102 from the analysis result by the analysis processing unit 103 or from the analysis result by the server 300.

Note that, although not illustrated, the autonomous movement control unit 121 grasps the surrounding situation on the basis of signals from various sensors necessary for autonomous traveling. The autonomous movement control unit 121 adjusts the speed and direction of the terminal device 100 according to the surrounding situation.

The scenario determination unit 125 determines a scenario 126 for performing analysis. Various scenarios 126 are prepared according to analysis content and purposes of analysis.

The use of the terminal device 100 that autonomously moves may be changed depending on the destination. The scenario determination unit 125 changes the scenario 126 so that analysis according to the current position of the terminal device 100 is executed. A plurality of scenarios 126 is stored in the storage 107 of the terminal device 100 so as to be able to cope with various situations (moving locations). However, the capacity of the storage 107 of the terminal device 100 is smaller than that of the server storage 307 of the server 300. Accordingly, the plurality of scenarios 126 may be stored in the server 300, and the scenario determination unit 125 may request the server 300 to transmit the scenario.

Although the hardware configuration of the terminal device 100 is not illustrated, the GNSS unit 122 and the drive unit 129 are added to the hardware configuration of the terminal device 100 described in the first embodiment. The GNSS unit 122 may be incorporated in the SoCFPGA 110 (however, the antenna part of the GNSS unit 122 is excluded), or may be a processor chip different from the SoCFPGA 110. In addition, the function of the scenario determination unit 125 is achieved by a program incorporated in the SoCFPGA 110.

Note that the terminal device 100 that moves is not limited to a robot that moves autonomously. For example, it may be an aerial drone or an underwater drone that moves autonomously, or the like. In addition, the terminal device 100 that moves may be attached to a robot arm, and the terminal device 100 may move by the movement of the robot arm. Furthermore, the terminal device 100 may have a structure attached to a vehicle or the like that moves by human control.

Next, as illustrated in Fig. 9, the server 300 includes a destination instruction unit 321 and the data transmission unit 104 as functions.

The destination instruction unit 321 determines the position of the destination of the terminal device 100, and instructs the terminal device 100 on the determined position of the destination via the data transmission unit 104. Basically, the position and the route of the destination are indicated by coordinate values in the GNSS unit 122 and transmitted to the terminal device 100. In addition, in a case where a movement range is determined in advance, map data indicating the movement range may be used as the position and the route of the destination. The map data is stored in the server storage 307. The destination instruction unit 321 uses the map data to designate the position and the route of the destination. The designated position and route of the destination are transmitted to the terminal device 100 via the data transmission unit 324 and the wireless communication unit 301. Of course, the map data may be changed according to the use range.

The other functions of the server 300 are similar to those of the first embodiment, and thus the description thereof will be omitted. Further, the hardware configuration is also similar to that of the first embodiment, and thus the description thereof will be omitted.

### (Processing procedure)

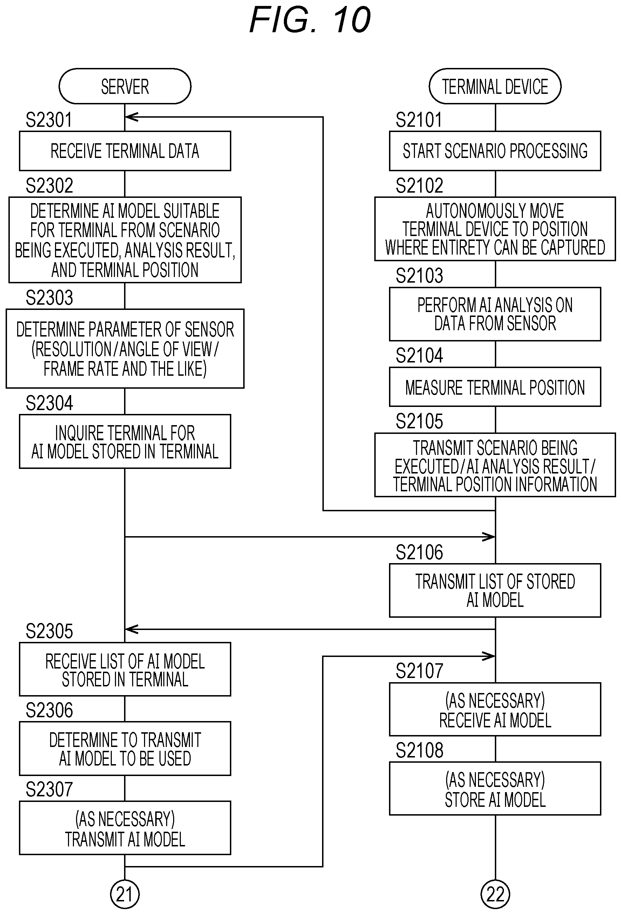

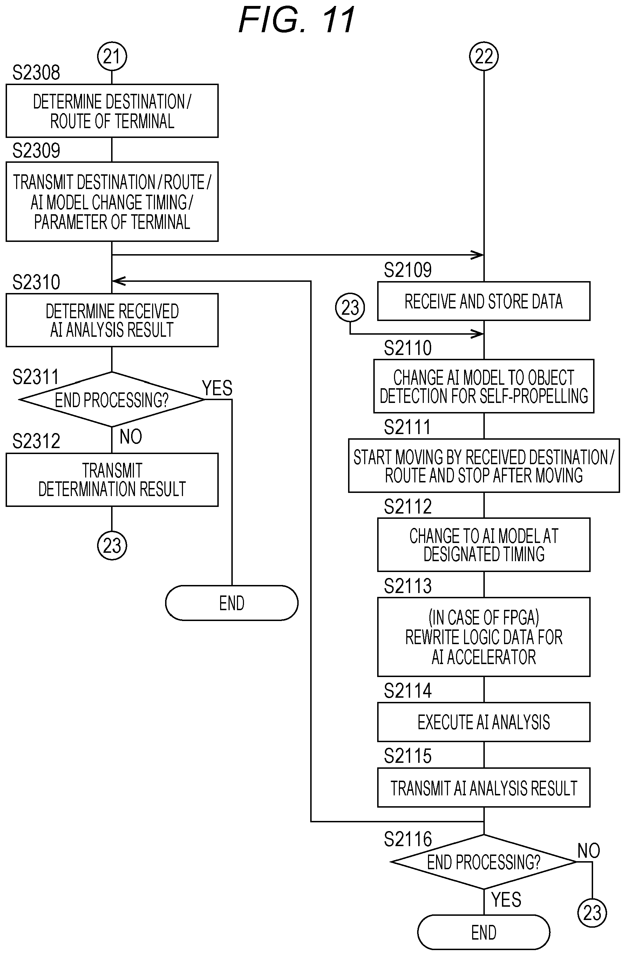

Figs. 10 and 11 are flowcharts illustrating a processing procedure in the second embodiment. Here, a processing procedure of the second embodiment will be described on the basis of the following premises. As described above, the terminal device 100 is a robot that autonomously moves. The robot includes an image sensor (movie camera) as the sensor 109.

Here, a processing procedure by the terminal device 100 and a processing procedure of the server 300 will be described. Note that, since the communication system 200 merely controls communication between the terminal device 100 and the server 300, description of a processing procedure thereof is omitted (the same applies to processing procedures of other embodiments).

First, the terminal device 100 starts scenario processing (S2101). The scenario 126, starting at this stage, is received from the server 300 and stored in the memory or the DRAM 108 in the SoCFPGA 110.

Subsequently, the terminal device 100 autonomously moves to a position where the entire venue of the place to be monitored (in a facility or the like) can be captured (S2102). The position where the entire venue of the place to be monitored (in a facility or the like) can be captured may be stored in the memory in the SoCFPGA 110 or the DRAM 108 as, for example, an origin position.

Subsequently, the terminal device 100 performs AI analysis on the data from the sensor 109 (S2103). The AI analysis is performed by the analysis processing unit 103 with the AI model set at this stage, similarly to the first embodiment.

Subsequently, the terminal device 100 measures the current position of the terminal device 100 (S2104). The position of the terminal device 100 is executed by the GNSS unit 122.

Subsequently, the terminal device 100 transmits the scenario 126 being executed, the AI analysis result, and the terminal position information to the server 300 (S2105).

The server 300 receives the data transmitted from the terminal device 100 (S2301). The received data is the scenario 126 being executed, the AI analysis result, and the terminal position information that are transmitted in S2103. The server 300 stores the received data in the server storage 307 together with the ID of the terminal device 100 that has transmitted the data.

Subsequently, the server 300 determines an AI model suitable for the current situation of the terminal device 100 according to the scenario 126 being executed from the received data (the running scenario, the AI analysis result, and the terminal position) (S2302).

Subsequently, the server 300 determines the parameter of the sensor 109 from the received data (S2303). Parameters of the sensor 109 are, for example, resolution, an angle of view (zoom magnification), a frame rate, and the like.

Subsequently, the server 300 inquires a list of AI models (AI model list) stored in the terminal device 100 (S2304).

The terminal device 100 that has received this inquiry transmits a list of the stored AI models (AI model list) (S2106).

Subsequently, the server 300 receives the AI model list (S2305).

Subsequently, the server 300 determines whether to transmit the AI model to be used (S2306).

Subsequently, as a result of the determination in step S2306, in a case where it is necessary to transmit the AI model, the server 300 transmits the AI model to the terminal device 100 (S2307).

In a case where the AI model is transmitted from the server 300, the terminal device 100 receives data (control program and/or logic data 106) of the AI model (S2107).

Subsequently, the terminal device 100 stores the received AI model in the memory in the SoCFPGA 110 or the DRAM 108 (S2108). Further, the received AI model is stored according to the capacity of the storage 107. As the AI model to be stored in the storage 107, for example, the AI model may be erased in order from the oldest one of the reception time and the last used time, and the newly received AI model may be stored.

Following the step of S2306, the server 300 determines a destination of the terminal device 100 and a route to the destination (S2308).

Subsequently, the server 300 transmits the destination, the route, the change timing of the AI model, and the parameter to the terminal device 100 (S2309).

The terminal device 100 receives the destination, the route, the change timing of the AI model, and the parameter data (S2109).

Subsequently, the terminal device 100 changes the AI model to object detection for self-propelling (S2110). Note that this step is not executed in a case where the AI model for self-propelling is already used at this stage.

Subsequently, the terminal device 100 starts moving itself (terminal device 100) according to the designated route, moves to the destination, and stops (S2111).

Subsequently, the terminal device 100 changes the AI model at the change timing designated by the server 300 (S2112). At this time, the terminal device 100 rewrites the logic data for the AI accelerator (in the case of the FPGA) (S2113). Note that, in the case of a configuration other than the FPGA, a control program for executing the AI model is installed in the terminal device 100. Further, at this time, the terminal device 100 changes the setting of the sensor 109 according to the received parameter.

Subsequently, the terminal device 100 executes analysis using the changed AI model (S2114).

Subsequently, the terminal device 100 transmits the analysis result to the server 300 (S2115).

Thereafter, when there is no instruction to end the processing (S2116: NO), the terminal device 100 returns to S2111 and continues the subsequent processing. The return to S2111 is to repeat the AI analysis and the movement. Therefore, in a case where the process returns to S2110 through the steps of S2114 and S2115, the terminal device 100 moves to the next destination in S2111. On the other hand, when there is an instruction to end the processing (S2116: YES), the terminal device 100 ends the processing (end).

The server 300 that has received the AI analysis result determines the received AI analysis (S2310).

Thereafter, when there is an instruction to end the processing (S2311: YES), the server 300 ends the processing (end). When the processing is completed, the server 300 displays the analysis result, the determination result, and the like on the operation display unit 360 and stores the analysis result, the determination result, and the like in the server storage 307. In addition, the analysis result, the determination result, and the like may be transmitted to the terminal device 100 designated in advance. On the other hand, when there is no instruction to end the processing (S2311: NO), the server 300 transmits the determination result to the terminal device 100 (S2312). Thereafter, the terminal device 100 continues the processing from step S2110. Note that, when the processing is not ended (S2311: NO), the server 300 may display the analysis result and the determination result at that time and store them in the server storage 307.

### (Operation)

Next, the operation of the second embodiment will be described with specific examples. In the following description, the S number corresponds to the procedure described above. Note that the specific examples described here are merely for describing the embodiments, and the present invention is not limited to such specific examples.

### (Specific example 1)

Specific example 1 assumes a situation where one robot (terminal device 100) that autonomously moves is used to conduct a remote class, a seminar, an exam, or the like. More specifically, for example, this is a situation in which the terminal device 100 capable of autonomous movement automatically monitors whether or not the student is cheating in an exam or the like.

First, the terminal device 100 starts processing in a state where the scenario 126 corresponding to the remote class is set (S2101). Scenario 126 is person confirmation for fraud prevention.

Subsequently, the terminal device 100 moves to a position where the entire venue can be captured at what is called a zoomed-out angle of view (S2102). Then, the terminal device 100 executes face detection from the captured image (S2103). For example, the terminal device 100 is placed at the test site 15 minutes before the start of the test. Then, the terminal device 100 moves to a position where the entire venue is visible, and captures the entire seat of the test venue. First, an AI model of face detection is set, and the terminal device 100 detects the presence of a face from the entire camera image and specifies the position of the face in the image. The position of the face is not a position in the frame but a position in a capturing range determined from the image. For example, in capturing a bird's eye view of a classroom, positions of respective seats in the classroom are converted into coordinates in advance, and the coordinates of the seats where faces have been detected are set as the positions of the faces. In addition, the position of the face may be, for example, a position in a three-dimensional coordinate system obtained by measuring the distance from the sensor 109 (or the terminal device 100) to the capturing target (here, the face) and adding the distance from the sensor 109 together with the position (two-dimensional) in the frame as in the first embodiment.

Subsequently, the terminal device 100 measures its own current position (S2104). The position measurement is executed by the GNSS unit 122. In addition, there is a possibility that an error occurs in position measurement using GNSS in a room, and thus position estimation from a captured image, position estimation using received radio wave intensity of a millimeter wave, or the like may be utilized for improving accuracy.

Then, the terminal device 100 collectively transmits the scenario 126 being executed (person confirmation for fraud prevention), the detection of a face as an analysis result, the position information of the face in the image, and the position information of the terminal device 100 to the server 300 (S2105).

The server 300 that has received these pieces of data determines the position of the terminal device 100, the AI model, and the parameter of the sensor 109 from the analysis result (S2301 to S2303). In the server 300, a plurality of AI models for performing detailed processing is prepared on the basis of the scenario 126, and the AI model to be executed in the terminal device 100 thereafter is determined from the scenario 126 in which the terminal device 100 is executing.

In this example, the scenario 126 being executed in the terminal device 100 is "person confirmation for fraud prevention". Thus, it can be seen that the processing to be executed by the terminal device 100 in the future should be changed from the face detection so far to face authentication. Further, in the case of this scenario 126, the terminal device 100 autonomously moves to a position where the face authentication processing can be performed as an action to be taken later, changes the AI model to the face authentication after the movement, and executes the face authentication for each person.

For this purpose, the server 300 confirms whether or not the AI model to be executed by the terminal device 100 is stored in the terminal device 100 (S2304). In a case where the AI model of the face authentication is already stored in the terminal device 100, the server 300 proceeds to the determination of the terminal position, but in a case where the AI model of the face authentication is not stored in the terminal device 100, the server 300 transmits the AI model of the face authentication to the terminal device 100 (S2305 to S2307). In the present embodiment, since the 5G communication system 200 is used, it is possible to exchange the data of the AI model (the control program and/or logic data 106) in real time. On the other hand, the terminal device 100 receives the data of the received AI model and stores the data in the storage 107 (S2107 to S2108).

Thereafter, the server 300 determines a destination and a route of the terminal device 100. For example, the server 300 holds map data of the test site. The server 300 maps the face detection position transmitted from the terminal device 100 to the map data. Then, a moving route for most efficiently performing face authentication of all the users is determined (S2308).

Thereafter, the server 300 transmits the destination, the route, the change timing of the AI model, and the parameter of the terminal device 100 (S2309). At this time, in this example, the timing of changing the AI model is instructed after the terminal device 100 stops at the destination.

Thereafter, the terminal device 100 changes the AI model to the object detection for self-propelling. The AI model of the object detection for self-propelling is stored in the terminal device 100 in advance, and thus the terminal device 100 reads and changes the AI model. The terminal device 100 becomes capable of moving such that the terminal device 100 itself autonomously moves while avoiding obstacles or the like on the route according to the changed AI model of object detection for self-propelling (S2110). This is because, for example, there is a possibility that the moving route presented by the server 300 cannot be passed depending on the situation of the site. Further, by autonomous movement, even in a case where there is an error in the route instructed from the server 300 or a rough route is instructed, or the like, the terminal device 100 can move to the target position.

Thereafter, the terminal device 100 starts moving to the stop position received from the server 300 and stops at the stop position (S2111).

Then, the terminal device 100 changes the AI model at the change timing of the AI model (S2112). In a case where the analysis processing by the AI is performed by the accelerator in the FPGA, the terminal device 100 temporarily stops the AI analysis, partially (or entirely) rewrites the logic data, and restarts the logic data as necessary (S2113). Thus, the AI model of the terminal device 100 can be changed not at the timing of switching the system program or the like but when the situation changes and the AI model needs to be replaced.

Thereafter, the terminal device 100 executes analysis using the AI model and transmits the result to the server 300 (S2114 to S2115). The AI model of face authentication creates a feature amount of a face as an analysis result, and creates feature data. Note that, at this time, even if the terminal device 100 is stationary at the stop position designated by the server 300, in a case where the stop position is not in front of the face, the terminal device 100 side may make a determination and autonomously move so that the capturing position by the sensor 109 is in front of the face.

Subsequently, the server 300 determines an analysis result. Since the scenario 126 is person confirmation for fraud prevention, the server 300 determines, for example, whether or not feature data that is an analysis result matches feature data registered in advance (S2310). If the feature data of the face of the seat matches the registered feature data, the server 300 determines that the identity has been successfully confirmed and transmits the result to the terminal (S2312). Once the identification confirmation is obtained, the terminal device 100 autonomously moves to perform the next face authentication as necessary (returns to step S2110).

As described above, in the second embodiment, by exchanging data between the terminal device 100 and the server 300 in real time and switching the AI model, it is possible to execute optimal analysis in response to a change in the situation, and the analysis accuracy is improved. For example, if the face is small or the orientation is not the front, there is a concern that the analysis accuracy is deteriorated. In the second embodiment, since the terminal device 100 can autonomously move, it is also possible to execute face recognition and analysis again by changing the position of the terminal device 100, and analysis accuracy can be further improved. In such real-time control, the low delay of 5G is particularly utilized.

### (Specific example 2)

Another specific example will be described. Specific example 2 assumes a situation where sports coaching is performed remotely using one robot (terminal device 100) that autonomously moves. The instruction of sports is, for example, form instruction.

In the case of form coaching, the scenario 126 is, for example, a golf swing analysis. The scenario 126 may be another sport, and may be prepared according to the content of teaching a form such as a baseball pitching form, a batting form, or a soccer shoot, for example.

First, the terminal device 100 moves to a position where the entire body appears, analyzes the swing of the person as an analysis target by the skeleton detection AI model, and acquires movement of the skeleton. The acquired data is transmitted to the server 300 (S2101 to S2104).

In the skeleton detection, a position where the analysis target is swinging may be automatically captured, or a display or a sound of "please swing" may be reproduced to prompt swinging. The terminal device 100 transmits "golf swing analysis" as the scenario 126, the skeleton detection result, and its own position information to the server 300 (S2105).

The server 300 determines the position of the terminal device 100, the AI model, and the parameter of the sensor 109 on the basis of the received data (S2301 to S2303).

In particular, in this example, the server 300 estimates the capturing angle on the basis of the scenario 126 and the analysis result from the terminal device 100, and determines the position of the terminal device 100 so as to obtain a necessary capturing angle. For example, when skeleton positions from the front, the left, and the right are necessary for swing analysis, the server 300 determines the destination of the terminal device 100 so as to be in those directions, and transmits the destination (S2304 to S2309).

Further, the server 300 also determines whether there is a problem in the analysis speed of the terminal device 100. For example, a high-level player has a faster swing speed than an ordinary person, and accurate analysis may not be possible at a normal analysis speed (frame rate). The determination criterion in such a case is, for example, calculation of the movement distance of the skeleton. Specifically, when movement coordinates of the elbows are larger than a threshold value, it is determined that high-speed swing is being performed. In such a case, the server 300 determines that AI analysis of the terminal device 100 cannot be supported. Further, also in a case where there is no posture of the skeleton serving as a reference for analysis, there is a high possibility that the frame rate is insufficient. In such a case, the server 300 changes the parameter of the sensor 109 so as to achieve a high frame rate. Note that, in a case where the frame rate is changed, the AI model is also changed to one compatible with the high frame rate as necessary.

The reason why capturing at a high frame rate is not always used is to suppress power consumption because the consumption of the battery of the terminal device 100 becomes severe when the high frame rate is used. Further, if the analysis is always performed at a high frame rate, the amount of data to be uploaded becomes large, and thus, for example, the amount of data to be uploaded is suppressed.

In addition, the AI model may use different models when the left swing is captured and when the right swing is captured.

Thereafter, similarly to the specific example 1 described above, analysis is repeatedly executed by the autonomous movement and the AI model of the terminal device 100 (S2110 to S2115 and S2310 to S2312).

In this example, the capturing target of the form analysis is assumed to be stationary (excluding movement such as a swing) on the spot, but the capturing target may be moving on the assumption of, for example, motion analysis during a game, or the like. In this case, the terminal device 100 may track the capturing target, change the parameter to a high frame rate when it is determined that the motion of the capturing target is faster, and change the parameter to a low frame rate when it is determined that the motion of the capturing target is slower. In addition, the terminal device 100 may utilize not only a robot that self-travels on the ground but also an aerial drone.

In addition, in the skeleton detection, a frame rate for analysis may be insufficient (a movement distance of the skeleton is equal to or more than a set threshold value, a point corresponding to the reference cannot be obtained, or the like). In such a case, the resolution may be reduced to set a high frame rate.

In the second embodiment, the AI model of another function is changed at the timing when the terminal device arrives at a designated moving position according to the scenario 126 designated in advance, but as in the first embodiment, even in the terminal device 100 capable of autonomous movement, only the parameter or only the AI model may be changed according to an AI processing result, and the terminal device may not move.

### (Specific example 3)

Another specific example will be described. Specific example 3 is a situation in which two robots (terminal devices 100) that autonomously move are used, and the robots cooperate to execute AI analysis. When such two terminal devices 100 operate in cooperation, there are roughly two patterns. In the first pattern, the two terminal devices 100 cooperate via the server 300. In the second pattern, the two terminal devices 100 cooperate without the server 300. In the following description, the two terminal devices 100 are referred to as a first terminal device (ID1) and a second terminal device (ID2).

First, the first pattern will be described. In the first pattern, the server 300 determines the moving position of each terminal device 100, the AI model, and the parameter of the device from the analysis results of the two terminal devices 100. This first pattern is suitable, for example, in a case where form analysis of sports is performed from the left and right.

First, the server 300 receives the scenario 126, the distance information, and the analysis result data from the two terminal devices 100. In a case where the coordinates of capturing targets of the two terminal devices 100 are the same and the scenario 126 is the same, the server 300 determines that the same capturing target is analyzed by the two terminal devices 100 and causes the two terminal devices 100 to perform cooperative operation (S2101 to S2105 and S2301).

Subsequently, the server 300 allocates what kind of analysis is to be executed to each of one terminal device 100 (first terminal device (ID1)) and another terminal device 100 (second terminal device (ID2)) from the content of the scenario 126. Regarding this allocation, for example, in a case where analysis from the front, the left, and the right is necessary in the form determination, the first terminal device (ID 1) is to analyze the left and the right, and the second terminal device (ID2) is to analyze the front. The allocation may be determined by the performance (specifications) of each terminal device 100. For example, the high-spec terminal device 100 may be caused to perform a large amount of analysis in the allocation.

This allocation is performed as a part of the AI model determination processing in step S2302.

When the allocation is determined, the server 300 determines a moving position necessary for analysis for each terminal. Further, the server 300 determines the AI model at the determined position. Then, the server 300 transmits each data to each terminal device 100 (S2303 to S2309).

Each terminal device 100 that has received each data moves to a designated position, changes the AI model, executes analysis, and transmits an analysis result to the server 300 (S2109 to S2115).

The server 300 that has received the analysis result evaluates the analysis result, and if it is necessary to correct the analysis content initially allocated due to analysis failure or the like, the server 300 corrects the allocation.

The failure of the analysis is, for example, that the battery runs out during the movement, or that unnecessary objects such as a ball are captured, and the analysis cannot be accurately performed.

In addition, in a case where there is the terminal device 100 whose analysis has been completed first, the server 300 may be configured to perform analysis of another terminal device 100. For example, in a case where the first terminal device (ID1) completes the capturing of the right side but the second terminal device (ID2) completes the capturing of the front before the capturing of the left side is completed, the server 300 allocates the capturing of the left side to the second terminal device (ID2), moves the second terminal device (ID2), and changes the AI model to a necessary AI model. On the other hand, the first terminal device (ID1) is instructed to stop capturing and analysis on the left side.

The server 300 transmits data such as the AI model, the parameter, and the moving position necessary for executing the corrected analysis to each terminal device 100. Thus, the first terminal device (ID 1) ends the analysis on the right side without performing the analysis on the left side, and ends all the processes when the analysis result is transmitted. Further, when receiving the corrected data from the server 300, the second terminal device (ID2) moves, changes the AI model, and executes capturing and analysis on the left side.

Next, the second pattern will be described. The second pattern assumes a situation in which a person is tracked in a relatively large space. In such a situation, it is preferable to determine the roles of the plurality of terminal devices 100 in advance. For example, one terminal device 100 is a master and the other is a slave. The master terminal device 100 executes a function as the server 300 in addition to the function of the terminal device 100. In a case where there is a difference in performance between the two terminal devices 100, the terminal device 100 having a higher function is set as a master. Here, the first terminal device (ID1) will be described as a master, and the second terminal device (ID2) will be described as a slave.

In the second pattern, in a case where a suspicious person is tracked at an event venue or the like, the first terminal device (ID1) performs zoom-out capturing, and the second terminal device (ID2) tracks the suspicious person from the analysis result. At this time, the distance to the suspicious person may be determined more accurately using not only the image sensor but also the distance measuring sensor as described above.

The zoom-out capturing by the first terminal device (ID1) is performed from a position where the person to be tracked can be tracked even if the person to be tracked moves in an event venue or the like as wide as possible. However, the zoom-out capturing is within a range in which the person can be detected. Note that, in a case where the entire event venue cannot be captured by one terminal device 100, the number of terminal devices 100 may be increased in order to capture the entire venue.

Then, when the suspicious person is detected, the second terminal device (ID2) that transmits the position of the tracking target person from the first terminal device (ID 1) to the second terminal device (ID2) moves to approach the position of the suspicious person and captures an image. Thus, it is possible to increase the analysis accuracy of the capturing target and, for example, identify the suspicious person. Note that, for the sensor 109, different parameters may be used or different equipment may be used for the first terminal device (ID1) and the second terminal device (ID2). For example, the sensor 109 (camera) of the first terminal device (ID1) sets the zoom magnification to a wide-angle side so that a wider range can be captured, or uses a wide-angle lens. On the other hand, the sensor 109 (camera) of the second terminal device (ID2) may use a lens having a high zoom magnification so as to be able to capture the face of the suspicious person. In addition, in the case of targeting such a wide place, the first terminal device (ID 1) may be the fixed terminal device 100, and only the second terminal device (ID2) may be the terminal device 100 that can autonomously move. However, even in the case of the fixed terminal device 100, it is preferable to be capable of changing the capturing direction, that is, to swing vertically and horizontally.

First, when the first terminal device finds a suspicious person (capturing target), the first terminal device moves backward to a position where the suspicious person has a certain size in the center so as not to overlook the suspicious person. The first terminal device (ID 1) measures the position of the suspicious person on the image from its own operation setting (angle of view, resolution, and camera installation height). The measured position is acquired as coordinates (S2101 to S2105). At this time, if only one sensor 109 (camera) is used, an error in position measurement up to the capturing target to be captured increases. Thus, two sensors 109 (cameras) may be prepared, and the depth information may be calculated so as to be a binocular camera. In addition, for the distance to the suspicious person, measurement accuracy may be increased using a distance measuring sensor (a depth camera, a LiDAR, or the like).

Information (analysis result) on suspicious person detection is determined in the first terminal device (ID1). This is a function as the server 300. The first terminal device (ID 1) further calculates a position (coordinates) of a destination of the second terminal device (ID2) and transmits the position (coordinates) to the second terminal device (ID2) (S2301 to S2303).

The second terminal device (ID2) moves to an instructed position, captures the suspicious person from the vicinity, and executes detailed analysis. For this purpose, the first terminal device (ID1) transmits the AI model for face authentication to the second terminal device (ID2) as necessary (S2304 to S2307, and S2106 to S2108).

In addition, the second terminal device (ID2) may be able to perform tracking with a certain distance so that the suspicious person is not aware of the tracking during the tracking. In this case, it is preferable to use a distance measuring sensor to measure the distance between the second terminal device (ID2) and the suspicious person.

In addition, during the tracking, the second terminal device (ID2) may lose sight of the suspicious person due to entry of the suspicious person into a blind spot, or fail in tracking of the suspicious person and go out of frame from the capturing range.

In such a case, the process moves again to the analysis by the first terminal device (ID1), the position of the suspicious person is determined, and the second terminal device (ID2) is moved again to the vicinity of the suspicious person. After the movement, the first terminal device (ID 1) resumes capturing and analysis (S2308 to S2311, and S2109 to S2115).

As described above, the second embodiment can cope with various situations by using a plurality of self-propelled terminal devices 100 in cooperation. In addition to the above specific example, in the second embodiment, for example, another movable terminal device 100 located at a remote place is called according to an analysis result of one terminal device 100, and the terminal device 100 can perform analysis.

For example, in the second embodiment, when the suspicious person detected by the first terminal device moves across the floor, the first terminal device on another floor can take over the capturing and analysis.

This is assumed to be used to track a suspicious person in an office or the like. In a case where the suspicious person moves across the floor, if the terminal device 100 is an aerial drone, the suspicious person can be tracked, but if the terminal device is in the form of a self-propelled robot, it is difficult to move across floors. In such a case, the server 300 searches for the terminal device 100 existing at an estimated movement destination of the suspicious person, and confirms whether there is a vacant terminal device 100. Then, in a case where there is an empty terminal device 100, the server 300 determines whether the empty terminal device 100 has specifications necessary for analysis such as detection of a suspicious person and identification of a person. The specifications include CPU, memory performance, and performance of the mounted image sensor. If there is no problem, the server 300 transmits the movement instruction and the AI model to the corresponding terminal device, and causes the terminal device 100 to take over the analysis.

In addition, in the second embodiment, for example, in a case where the suspicious person detected by the first terminal device equipped with the visible light camera is expected to move to a dark place, the second terminal device equipped with a night-vision camera or an infrared camera can take over the capturing and analysis.

Although the embodiments of the present invention have been described above, the present invention is not limited to the above-described embodiments. The conditions, numerical values, and others used in the description of the embodiments are merely for description, and thus the present invention is not limited to these conditions and numerical values. In addition, in the embodiment, an example in which two terminal devices 100 are used has been described, but the number of terminal devices may be one, or may be two or more, or even more.

The information processing program according to the present invention can also be implemented by a dedicated hardware circuit. Still furthermore, the information processing program can be provided with a computer readable recording medium such as a USB (universal serial bus) memory or a DVD (digital versatile disc)-ROM (read only memory). Alternatively, the information processing program can also be provided online through a network such as the Internet, instead of a recording medium. In a case where the information processing program is provided online, the information processing program is recorded in a recording medium such as a magnetic disk in a computer connected to a network.

Still furthermore, the present invention can be variously modified on the basis of the configuration described in the claims, and the modifications are also within the scope of the present invention.

The present application is based on Japanese Patent Application (No. 2021-127978) filed on August 4, 2021, the disclosure content of which is incorporated herein by reference in its entirety.

### Reference Signs List

- 1, 2: Information processing system
- 100: Terminal device
- 101: Wireless communication unit
- 102: Analysis operation setting control unit
- 103: Analysis processing unit
- 104: Data transmission unit
- 105: Machine learning model change unit
- 106: Control program and/or logic data
- 107: Storage
- 109: Sensor
- 121: Autonomous movement control unit
- 122: GNSS unit
- 125: Scenario determination unit
- 126: Scenario
- 129: Drive unit
- 150: 5G communication interface
- 200: 5G communication system
- 300: Server
- 301: Wireless communication unit
- 302: Terminal reception data analysis unit
- 303: Terminal function control unit
- 307: Server Storage
- 321: Destination instruction unit

## Claims

1. An information processing system including
a terminal device that includes a sensing device and performs analysis processing on data from the sensing device, and
a server that performs data transmission with the terminal device via wireless communication, the information processing system comprising:
a control unit that controls an analysis operation setting that is a setting of the terminal device for performing the analysis processing on the data from the sensing device, wherein
the control unit controls the analysis operation setting in such a manner as to enable performing optimum analysis.

2. The information processing system according to claim 1, wherein
the analysis processing by the terminal device is processing by a machine learning model of artificial intelligence, and
the control of the analysis operation setting by the control unit includes a change of the machine learning model.

3. The information processing system according to claim 1 or 2, wherein the control unit changes the analysis operation setting according to an analysis result by the analysis processing.

4. The information processing system according to any one of claims 1 to 3, wherein the terminal device is movable.

5. The information processing system according to claim 4, wherein the control unit designates a destination of the terminal device according to an analysis result by the analysis processing.

6. The information processing system according to claim 4 or 5, wherein the control unit changes the analysis operation setting according to a position of the terminal device.

7. The information processing system according to any one of claims 1 to 6, wherein the control unit changes the analysis operation setting according to a distance from the terminal device to a sensing target by the sensing device.

8. The information processing system according to any one of claims 1 to 7, wherein
the sensing device is a camera that captures a moving image, and
the control unit changes the analysis operation setting according to a moving distance between frames of a target object shown in the moving image.

9. The information processing system according to any one of claims 1 to 8, wherein, in the control unit, the control of the analysis operation setting by the control unit includes switching between operation and non-operation of the sensing device.

10. The information processing system according to any one of claims 1 to 9, further comprising:
a plurality of the terminal devices, wherein
the control unit controls the analysis operation setting for each of the terminal devices.

11. The information processing system according to claim 9, wherein
each of the plurality of the terminal devices transmits data of the sensing device and/or an analysis result by the analysis processing to the server,
the server includes a storage unit that stores the data of the sensing device and/or the analysis result by the analysis processing in association with the terminal device that has transmitted the data and/or the analysis result, and
the control unit controls the analysis operation setting of each of the terminal devices on a basis of the data of the sensing device and/or the analysis result by the analysis processing stored in the storage unit.

12. The information processing system according to claim 10 or 11, wherein the control unit selects the terminal device to be caused to execute the analysis processing from among the plurality of terminal devices on a basis of the analysis result by the analysis processing.

13. The information processing system according to any one of claims 10 to 12, wherein the control unit selects the terminal device to be caused to execute the analysis processing according to a position of each of the plurality of the terminal devices.

14. An information processing program for controlling a terminal device in an information processing system including
the terminal device that includes a sensing device and performs analysis processing on data from the sensing device, and
a server that performs data transmission with the terminal device via wireless communication, the information processing program causing a computer to execute:
a step of controlling an analysis operation setting that is a setting of the terminal device in such a manner as to enable the terminal device that performs the analysis processing on the data from the sensing device to perform optimum analysis.

15. The information processing program according to claim 14, wherein
the analysis processing by the terminal device is processing by a machine learning model of artificial intelligence, and
the step of controlling the analysis operation setting includes a change of the machine learning model.

16. The information processing program according to claim 14 or 15, wherein in the step of controlling the analysis operation setting, the analysis operation setting is changed according to an analysis result by the analysis processing.

17. The information processing program according to any one of claims 14 to 16, wherein the terminal device is movable.

18. The information processing program according to claim 17, wherein in the step of controlling the analysis operation setting, a destination of the terminal device is designated according to an analysis result by the analysis processing.

19. The information processing program according to claim 17 or 18, wherein in the step of controlling the analysis operation setting, the analysis operation setting is changed according to a position of the terminal device.

20. The information processing program according to any one of claims 14 to 19, wherein in the step of controlling the analysis operation setting, the analysis operation setting is changed according to a distance from the terminal device to a sensing target by the sensing device.

21. The information processing program according to any one of claims 14 to 20, wherein
the sensing device is a camera that captures a moving image, and
in the step of controlling the analysis operation setting, the analysis operation setting is changed according to a moving distance between frames of a target object shown in the moving image.

22. The information processing program according to any one of claims 14 to 21, wherein the step of controlling the analysis operation setting includes switching between operation and non-operation of the sensing device.

23. The information processing program according to any one of claims 14 to 22, wherein
a plurality of the terminal devices is included, and
in the step of controlling the analysis operation setting, the analysis operation setting is controlled for each of the terminal devices.

24. The information processing program according to claim 23, wherein
each of the plurality of the terminal devices transmits data of the sensing device and/or an analysis result by the analysis processing to the server,
the server includes a storage unit that stores the data of the sensing device and/or the analysis result by the analysis processing in association with the terminal device that has transmitted the data and/or the analysis result, and
in the step of controlling the analysis operation setting, the analysis operation setting of each of the terminal devices is controlled on a basis of the data of the sensing device and/or the analysis result by the analysis processing stored in the storage unit.

25. The information processing program according to claim 23 or 24, wherein in the step of controlling the analysis operation setting, the terminal device to be caused to execute the analysis processing is selected from among the plurality of the terminal devices on a basis of the analysis result by the analysis processing.

26. The information processing program according to any one of claims 23 to 25, wherein in the step of controlling the analysis operation setting, the terminal device to be caused to execute the analysis processing is selected according to a position of each of the plurality of the terminal devices.
